(19) **Europäisches Patentamt / European Patent Office / Office européen des brevets**

(11) **EP 2 941 552 B1**

(12) # EUROPEAN PATENT SPECIFICATION

(45) Date of publication and mention
of the grant of the patent:
**22.02.2017 Bulletin 2017/08**

(21) Application number: **13824415.7**

(22) Date of filing: **17.12.2013**

(51) Int Cl.:
*F01N 3/20* (2006.01)     *F01N 3/021* (2006.01)

(86) International application number:
**PCT/SE2013/051529**

(87) International publication number:
**WO 2014/107129 (10.07.2014 Gazette 2014/28)**

(54) **SILENCER INCLUDING A PARTICLE FILTER, A VAPORISATION PIPE AND A SCR-CATALYST**

SCHALLDÄMPFER MIT EINEM PARTIKELFILTER, VERDAMPFUNGSROHR UND SCR-KATALYSATOR

SILENCIEUX COMPRENANT UN FILTRE À PARTICULES, UN TUBE DE VAPORISATION ET UN CATALYSEUR DE RÉDUCTION CATALYTIQUE SÉLECTIVE (SCR)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.01.2013 SE 1350007**

(43) Date of publication of application:
**11.11.2015 Bulletin 2015/46**

(73) Proprietor: **Scania CV AB**
**151 87 Södertälje (SE)**

(72) Inventors:
• **SANDSTRÖM, Ola**
**S-136 71 Haninge (SE)**

• **BAUDIN, Micael**
**752 17 Uppsala (SE)**
• **ROSVALL, Esa**
**S-151 59 Södertälje (SE)**

(74) Representative: **Scania CV AB**
**Patents, GP 117kv**
**151 87 Södertälje (SE)**

(56) References cited:
**EP-A1- 2 075 426     EP-A2- 2 325 448**
**WO-A1-02/11862     WO-A1-2004/038192**

## Description

TECHNICAL FIELD

The present invention relates to a silencer for a combustion engine and to an exhaust system which comprises the silencer and a method for exhaust purification of a silencer.

BACKGROUND TO THE INVENTION AND PRIOR ART

Diesel engines are provided with exhaust purification devices with the object of reducing discharges of particles and harmful gases which occur in diesel engine exhaust gases. To regulate emissions from vehicles there are various standards and legal requirements which govern permissible levels for exhaust discharges. Vehicles are consequently provided with various purification devices for exhaust gases in order to meet legal requirements.

Silencers are used in combustion engines to damp engine noise and reduce emissions and are usually situated in the engine's exhaust system. The noise may be damped by providing one or more filters in a casing through which the sound waves pass, and/or by reducing the velocity of the exhaust gases through the silencer, e.g. by changes of direction of the exhaust flow in the silencer. The velocity of the exhaust gases and the sound waves is thus reduced.

Combustion engines provided with a silencer may be used in various different applications, e.g. in heavy vehicles such as trucks or buses. The vehicle may alternatively be a passenger car. Motorboats, steamers, ferries or ships, industrial engines and/or engine-powered industrial robots, power plants, e.g. an electric power plant provided with a diesel generator, locomotives or other applications may have combustion engines with silencers.

Particle emissions from these combustion engines, particularly in the case of diesel-powered heavy vehicles, may be reduced by means of particle filters. A particle filter comprises an element made of porous material, e.g. a mineral-based material such as cordierite or ceramic or sintered material. With such filter materials it is possible to achieve a very high degree of filtration of particles from an exhaust flow, usually over 99%.

Another known practice is to use a so-called SCR (selective catalytic reduction) system which comprises a reducing agent and a catalyst with an SCR substrate for purification of nitrogen dioxides ($NO_x$) from exhaust gases. To reduce the nitrogen dioxide content and also be able to convert the nitrogen dioxides to less harmful gases, the exhaust gases are treated with a reducing agent, e.g. a mixture of 32.5% urea and water. Injecting the liquid and mixing it with the exhaust gases results in a chemical reaction whereby nitrogen gas and water are formed across the SCR catalyst.

Urea solutions may be supplied by means of an injection system which extends into the exhaust line. The injection system has one or more outlet apertures via which the urea solution is injected into the exhaust line. During much of diesel engine operation the exhaust gases are at a high enough temperature to vaporise the urea solution so that ammonia is formed, but it is difficult to prevent part of the urea solution supplied from coming into contact with and becoming attached to the inside wall surface of the exhaust line in an unvaporised state. The exhaust line, which is often in contact with and cooled by surrounding air, will be at a lower temperature than the exhaust gases within it. When a combustion engine is run in a uniform way for a period of time, the dosage will be constant, which means that the urea solution will encounter substantially the same region of the exhaust line throughout the period of time. This will cause the urea solution injected to contribute to the cooling of the exhaust line wall locally in this region, thereby further exacerbating the situation. The temperature may therefore be lowered locally in this region to below 100*C, leading to the formation of a film of urea solution which is entrained by the exhaust flow. After a certain distance the water in the urea solution will boil away, leaving solid urea which is slowly vaporised by the heat. If the supply of solid urea is greater than the vaporisation, an accumulation of urea in the exhaust line will occur. Urea may break down into a number of different products which may further react with one another and with newly supplied urea from the exhaust gases. The result will be urea-based primitive polymers which form coatings on the inside of the exhaust line. Such coatings in the form of urea lumps or urea crystals may over time block an exhaust line and disrupt the exhaust flow by causing a high backpressure in the exhaust system.

There is a great need for a high degree of exhaust purification for combustion engines. There is also a great need for compact configuration of exhaust purification devices, since the space in which the engine is situated is often limited. The space for example on a vehicle chassis is very limited. A known way of partly solving these problems is to construct the vehicle's silencer in such a way that it also comprises built-in or built-on purification equipment. Patent applications US20080066451 and US20020046555 refer to examples of such silencers, but a problem of those solutions is that they are not compact enough.

Also WO 2004/038192 shows an example of such arrangements.

There is thus a need to improve existing silencers in order to reduce or eliminate the abovementioned disadvantages.

SUMMARY OF THE INVENTION

An object of the present invention is to propose a compact configuration for a silencer which comprises an SCR purification system and a particle filter. Another object of the invention is to achieve a high degree of purification of both particles and NO$_x$.

A further object of the invention is to reduce the problem of the formation of urea crystals in the SCR purification system.

The above objects are achieved with a silencer according to the invention. The silencer may initially be defined such that it comprises a casing with a substantially circular cylindrical shell surface, a first end element and a second end element, at least one inlet for leading an exhaust flow into the casing and at least one outlet for leading the exhaust flow out from the casing. The silencer comprises also a selective catalytic reduction (SCR) purification system comprising an SCR substrate, a vaporisation pipe and an arrangement for adding a reducing agent to the exhaust flow in order to reduce the latter's NO$_x$ contents.

The silencer is characterised in that it further comprises a first cylindrical space close to the inlet, a particle filter close to the first space and a first cylindrical duct close to the particle filter. The exhaust gases are caused to flow to the first cylindrical duct from the first space through the particle filter in a substantially radial direction relative to the silencer's centreline. The exhaust gases in the first cylindrical duct are caused to flow in a first direction towards the first end element of the casing. The first cylindrical duct surrounds the SCR substrate and the vaporisation pipe is substantially concentric with the SCR substrate. The SCR substrate surrounds the vaporisation pipe, which is connected to the first duct via a passage. The exhaust gases in the vaporisation pipe are caused to flow towards the second end element of the casing in a second direction which is opposite to the first direction. A second duct is provided between the vaporisation pipe and the SCR substrate so that the exhaust gases flow to the SCR substrate through the second duct on the outside of the vaporisation pipe. The exhaust gases in the second duct are caused to flow in the first direction. This makes it possible for the exhaust flow to warm the vaporisation pipe and for the temperature of the pipe to be kept at a stable level and for the formation of urea lumps to be thereby reduced. In addition, the outlet is situated close to the SCR substrate and the exhaust gases flow out from the silencer via the outlet when they have passed the SCR substrate.

The above objects are also achieved with a method for exhaust purification for a silencer as above. The method comprises the steps of leading the exhaust gases from the inlet into a first cylindrical space and thence to a first cylindrical duct through a particle filter in a substantially radial direction relative to the silencer's centreline. The exhaust gases are led through the first duct in a first direction towards the first end element of the casing. They are thereafter led from the first duct to the vaporisation pipe via a passage in which there is an arrangement for adding a reducing agent. The vaporisation pipe is connected to the first duct via a passage. The exhaust gases in the vaporisation pipe are then led towards the second end element of the casing in a second direction which is opposite to the first direction. They are then led from the vaporisation pipe to a second duct which is outside the vaporisation pipe and in which they flow in the first direction. From the second duct the exhaust gases are then led to an SCR substrate through which they are led in the second direction. The exhaust gases are finally led out from the casing via the outlet.

The invention relates also to an exhaust system for a combustion engine provided with a silencer according to the invention. The exhaust system may for example be part of a motor vehicle which may be a truck, bus or car.

Further objects, advantages and features of the present invention are indicated by the detailed description set out below.

BRIEF DESCRIPTION OF THE DRAWINGS

Figure 1 is a schematic sideview of a vehicle with a silencer.

Figure 2 is a schematic perspective view of a cross-section of a silencer according to an embodiment of the invention.

Figure 3 is a schematic sideview of the cross-section of the silencer in Figure 2, with the exhaust flow represented by arrows.

DETAILED DESCRIPTION OF THE INVENTION

Combustion engines may be used in various types of applications and vehicles today, e.g. in heavy vehicles such as trucks or buses, in cars, motorboats, steamers, ferries or ships. They may also be used in industrial engines and/or engine-powered industrial robots, power plants, e.g. electric power plants provided with a diesel generator, and in locomotives. The silencer according to the present invention is intended for a combustion engine and may be employed preferably in a vehicle, e.g. in a truck or bus.

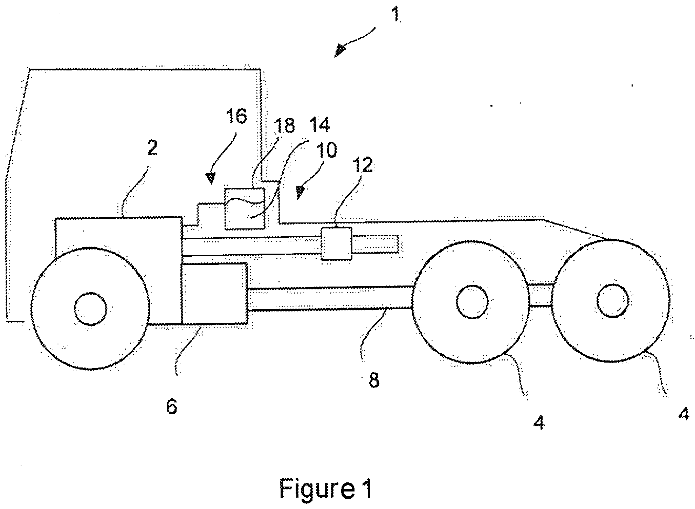

Figure 1 depicts a vehicle 1 in a schematic side view and provided with a combustion engine 2 which powers the vehicle's tractive wheels 4 via a gearbox 6 and a propeller shaft 8. The engine 2 is provided with an exhaust system 10 in which a silencer 12 is fitted. The engine is powered by fuel 14 supplied to it via a fuel system 16 which comprises a fuel tank 18.

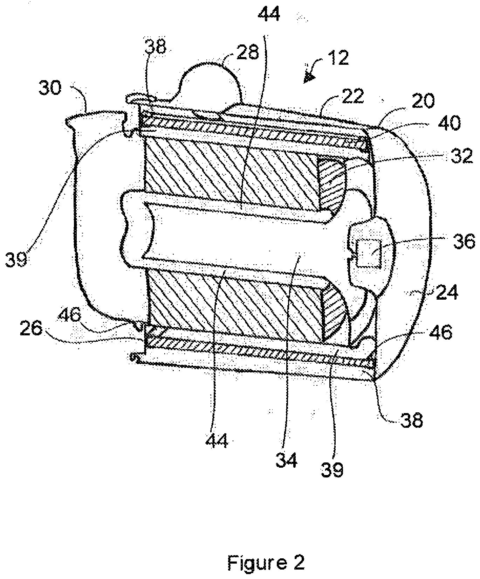

Figure 2 is a schematic perspective view of a silencer 12 according to an embodiment of the present invention. The silencer comprises a casing 20 with a substantially circular cylindrical shell surface 22, a first end element 24 and a second end element 26. It has also at least one inlet 28 for leading an exhaust flow into the casing. The inlet is situated adjacent to the second end element 26. To lead the exhaust flow out from the casing an outlet 30 is provided adjacent to the second end element 26.

The silencer 12 is provided with an SCR system which comprises a catalyst with an SCR substrate 32. A vaporisation pipe 34 and an arrangement 36 for adding a reducing agent to the exhaust flow in order to reduce NOx contents are provided adjacent to the first end element 24 in a passage 42. The exhaust gases are caused to flow via this passage 42 in which there is the arrangement 36 for adding the reducing agent. The reducing agent may for example be a mixture of water and urea, e.g. a product with the tradename AdBiue®, and the SCR substrate may comprise a vanadium or noble metal catalyst which breaks $NO_x$ down to water vapour and nitrogen.

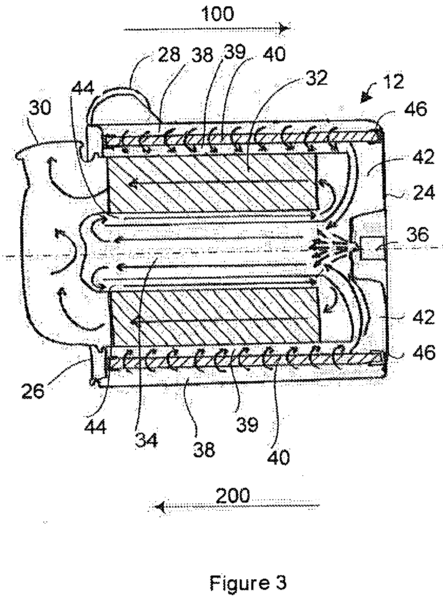

The silencer 12 comprises a first cylindrical space 38 close to the inlet 28. A particle filter 40 is provided close to the first space 38. As may be seen in Figure 2, the filter 40 is situated, in the space 38 and serves as a boundary between the space 38 and a first cylindrical duct 39. The first cylindrical duct 39 is situated close to the particle filter 40 in a radial direction relative to the casing's centreline. The centreline is an imaginary line extending axially between the midpoints of the end elements of the cylindrical silencer, as represented by a chain-dotted line running through it in Figure 3.

Figure 3 depicts the flow of the exhaust gases in more detail. They are caused to flow from the first space 38 to the first cylindrical duct 39 through a cylindrical particle filter 40 in a substantially radial direction relative to the silencer's centreline. The exhaust gases in the first duct 39 are then caused to flow in a first direction 100 towards the casing's first end element 24 by the end of the first duct 39 towards the second end element 26 being closed and a passage 42 being provided close to the end of the first duct 39 towards the first end element 24. To achieve a compact configuration, the first cylindrical duct 39 and the particle filter 40 surround the SCR substrate 32 in the radial direction. The particle filter's contact surface with the exhaust flow can thus be maximised and more effective filtration of particles be achieved.

It is important to prevent leakage of unfiltered exhaust gases from the space 38 to the duct 39, so the filter needs to be fitted in a leakproof way. The particle filter 40 may be fitted by means of fitting elements, e.g. rails 46, as depicted in Figures 2 and 3. The rails are fastened on the inside of the first rail element 24 and the second end element 26. The particle filter 40 is fitted concentrically with the vaporisation pipe 34. The particle filter is preferably circular cylindrical and surrounds the whole circumference. Alternatively, the particle filter might be so placed as to cover only the upper half of the silencer's circumference, since the bulk of the exhaust flow will pass through the upper portion of the filter. The fact that the particle filter 40 is situated between the first space 38 and the second duct 39 so that it surrounds the SCR substrate 32 in the radial direction in a leakproof way concentrically with the vaporisation pipe makes it possible for the number of particles leaving the silencer to be reduced substantially and for a degree of filtration of at least 99% to be achieved at the same time as a very compact configuration.

For optimum vaporisation and configuration, the vaporisation pipe 34 is placed substantially concentrically with the SCR substrate 32 in such a way that the substrate surrounds the pipe. The pipe is connected to the first duct 39 via a passage 42, as depicted in Figure 3. The same diagram also shows the exhaust gases in the vaporisation pipe being caused to flow towards the silencer's second end element 36 in a second direction 200 which is opposite to the first direction 100.

According to the present invention, a second duct 44 is provided between the vaporisation pipe 34 and the SCR substrate 32 so that the exhaust gases flow to the substrate through the second duct 44. The exhaust gases in the second duct are caused to flow in the first direction 100. This is achieved by the vaporisation pipe 34 being closed at its end which leads towards the second end element 26 so that when the exhaust flow has passed through the vaporisation pipe in the second direction 200 it is forced to change to the first direction 100 and flow into the second duct 44. The exhaust flow will still be warm enough to heat the outside of the vaporisation pipe 34. The second duct 44 is similarly closed at its end which leads towards the first end element 24 so that the exhaust gases are forced to change direction again, leading them to the SCR substrate 32. They flow through the SCR substrate in the second direction 200 and are finally led out through the outlet 30. Arranging the flow of the exhaust gases as described above makes it possible to achieve a low backpressure through the silencer 12. The number of changes of direction of the exhaust flow is minimised and they are optimised in pressure drop terms. The pressure drop may for example be optimised by altering the curvature at the changes of direction. Low backpressure in the exhaust system results in better engine performance and reduces fuel consumption, making it possible to reduce harmful exhaust gases from engines.

The configuration of the silencer means that the exhaust gases can be led symmetrically into the vaporisation chamber. After the vaporisation chamber they are led into the second duct 44 on the outside of the vaporisation pipe 34 and thereby warm the pipe. This also makes it possible to improve the vaporisation, since the pipe 34 is warmed by the exhaust gases, reducing the risk of build-up of urea crystals.

The particle filter 40 is preferably a fibre filter which may for example contain or consist of silicon dioxide fibres. Soot particles become attached to the surface of the fibres or are captured by the fibres. The filter may be regenerated by the soot particles burning, which may take place spontaneously or in a controlled way.

To make it possible for soot particles to burn at relatively low temperatures, e.g. between about 200 and 300°C, the fibres may be coated with catalytic material, e.g. a noble metal such as platinum, rhodium or palladium, preferably platinum. The coating may be effected by any suitable known technique, e.g. by impregnation, or by spray coating of the fibres.

Silicon dioxide fibres have a high melting point, about 1700°C, and are therefore suitable for use in a particle filter of a combustion engine, in which the temperature of the exhaust gases in the downstream exhaust system may be up to about 1200*C. Silicon dioxide fibres are also tolerant of temperature shocks and many chemicals, e.g. powerful acids. For backpressure reasons, handling reasons and health reasons, the silicon dioxide fibres preferably have an average diameter of at least 5 $\mu$m, e.g. 5-20 $\mu$m.

The silicon dioxide fibres are preferably made of pure silicon dioxide. An example of fibre material of this kind is supplied by the company Saint Gobain Quartz, e.g. under a trademark Quartzel® Wool.

Silicon dioxide fibres are often supplied in the form of a fibre mat in which the silicon dioxide fibres are randomly tangled, forming a network, which means that soot particles, which may have a sticky surface, can both become attached to the surface of the fibres and be captured in the fibre network formed. The filter may be made by the fibre mat being compressed or packed in such a way as to achieve a desired amount of fibres in a certain volume. The packing may be effected mechanically, e.g. by a moulding press. To give the filter stability and support, it may be surrounded by or enclosed in a metal mesh.

The silicon dioxide fibre filter is preferably so dimensioned that a degree of filtration of over 99% is achieved, obviating the need for any further particle filters in the exhaust system.

According to the present invention, the fibre filter preferably has a porosity of between 95 and 99%. Porosity means the amount of air which the filter can contain. The raw material for the silicon dioxide fibres may have a density of about 2200 kg/m$^3$.

The fibre filter may be so dimensioned as to preferably have a face velocity FV of not more than 1 m/s. FV means the velocity at which the exhaust flow passes the surface of the filter and is defined by the formula

$$FV = Q_{max}/A \leq 1 \text{ m/s},$$

in which

> $Q_{max}$ = maximum exhaust flow in the exhaust system, in m$^3$/s, and
> A = the filter's surface area, in m$^2$, through which the exhaust flow passes.

Also, the ratio of fibre mass to maximum exhaust flow in the fibre filter should preferably be

$$m_f/Q_{max} \geq 1500 \text{g}/1 \text{ m}^3/\text{s},$$

in which

$m_f$ = fibre mass

The maximum porosity of the fibre filter is preferably not more than 99.3%.

The space in the silencer is often limited and it is therefore necessary to be able to fit all of its components in a space-saving way. The thickness of the fibre filter may be between about 15 and 60 mm, preferably between about 25 and 50 mm. Total area and volume are limited by the silencer's dimensions.

An example of dimensions for a fibre filter according to the invention might be as follows. A silencer has a limited space for a particle filter. The filter may have a thickness of not more than 25 mm. The maximum exhaust flow from the engine is 3600 m$^3$/h (=1 m$^3$/s). The formula for FV may be used to calculate that the surface area for the filter has to be at least 1 m$^2$. The volume of the filter will therefore be 0.025 m$^3$. The ratio $m_f/Q_{max}$), $\geq 1500$g/1 m$^3$/s may be used to calculate that the fibre mass has to be at least 1.5 kg.

The density of the silicon dioxide used as raw material for the silicon dioxide fibres is 2200 kg/m$^3$. The porosity may therefore be calculated as 97.3%.

The present silencer and method for exhaust purification of a silencer have various advantages over conventional silencers. The silencer's configuration is more compact and requires less space than that of conventional silencers. As the backpressure generated in the present silencer is lower than in the case of conventional silencers, the fuel consumption may also be lower. At the same time a high degree of purification from both particles and NO$_x$ is achieved.

The present description of the preferred embodiments of the present inventions is provided with the object of illustrating and describing the invention. The embodiments described are not intended to be exhaustive or to limit the invention, as it is limited by the scope of the attached claims.

**Claims**

1. A silencer (12) for a combustion engine, which silencer (12) comprises a casing (20) with a substantially circular cylindrical shell surface (22), a first end element (24) and a second end element (26), at least one inlet (28) for leading an exhaust flow into the casing (20) and at least one outlet (30) for leading the exhaust flow out from the casing (20), a selective catalytic reduction (SCR) purification system which comprises an SCR substrate (32), a vaporisation pipe (34) and an arrangement (36) for adding a reducing agent to the exhaust flow in order to reduce NO$_x$ contents of the exhaust flow, **characterised in**

**that**

- the silencer (12) comprises a first cylindrical space (38) close to the inlet (28), a particle filter (40) close to the first space (38), and a first cylindrical duct (39) close to the particle filter (40), which particle filter (40) is circular cylindrical and surrounds the SCR substrate in the radial direction, such that the exhaust gases are caused to flow from the first space (38) to the first cylindrical duct (39) through the particle filter (40) in a substantially radial direction relative to the silencer's centreline, in which duct (39) the exhaust gases are caused to flow in a first direction (100) towards the first end element (24) of the casing;

- the first cylindrical duct (39) surrounds the SCR substrate (32);

- the vaporisation pipe (34) is situated substantially concentrically with the SCR substrate (32), and the SCR substrate (32) surrounds the vaporisation pipe (34), such that the vaporisation pipe (34) is connected to the first duct (39) via a passage (42) and the exhaust gases in the vaporisation pipe (34) are caused to flow towards the second end element (36) of the casing (20) in a second direction (200) which is opposite to the first direction (100);

- a second duct (44) is provided between the vaporisation pipe (34) and the SCR substrate (32), such that the exhaust gases flow to the SCR substrate (32) through the second duct (44) on the outside of the vaporisation pipe (34) and the exhaust gases in the second duct (44) are caused to flow in the first direction (100);

- the outlet (30) is situated close to the SCR substrate (32) such that the exhaust gases are caused to flow out from the silencer (12) via the outlet (30) when the exhaust gases have passed the SCR substrate (32).

2. A silencer (12) according to claim 1, **characterised in that** the particle filter (40) is a fibre filter which comprises silicon dioxide fibres.

3. A silencer (12) according to claim 2, **characterised in that** the silicon dioxide fibres have an average diameter of 5-20 $\mu$m.

4. A silencer (12) according to either of claims 2 and 3, **characterised in that** the fibre filter is so dimensioned that its face velocity

- FV = $Q_{max}/A \leq 1$ m/s, in which

$Q_{max}$ = maximum exhaust flow in the exhaust system (m$^3$/s), and
A = the filter's surface area (m$^2$) through which the exhaust flow passes

- the ratio of fibre mass to maximum exhaust flow in the fibre filter

$m_f/Q_{max} \geq 1500$g/1 m$^3$/s, in which
$m_f$ = fibre mass

- the fibre filter's maximum porosity is less than or equal to 99.3%.

5. A silencer (12) according to any one of claims 2-4 above, **characterised in that** the fibre filter's porosity is 95-99 %.

6. A silencer (12) according to any one of claims 2-5 above, **characterised in that** the fibres in the fibre filter are coated with catalytic material.

7. A silencer (12) according to any one of the foregoing claims, **characterised in that** the thickness of the particle filter is from 25 to 50 mm.

8. An exhaust system (10) for a combustion engine (2), **characterised in that** the exhaust system (10) is provided with a silencer (12) according to any one of claims 1-7.

9. A method for exhaust purification of a silencer (12) of a combustion engine, which silencer (12) comprises a substantially circular cylindrical casing (20), a first end element (24) and a second end element (26) and at least one inlet (28) for leading exhaust gases into the casing (20) and at least one outlet (30) for leading the exhaust gases out from the casing (20), a selective catalytic reduction (SCR) purification system which comprises an SCR substrate (32), a vaporisation pipe (34) and an arrangement (36) for adding a reducing agent to the exhaust flow in order to reduce NO$_x$ contents of the exhaust flow, which method comprises the following steps:

- leading the exhaust gases from the inlet (28) into a first cylindrical space (38);

- leading the exhaust gases from the first space (38) to a first cylindrical duct (39) in a substantially radial direction relative to the silencer's centreline through a circular cylindrical particle filter (40) which surrounds the SCR substrate (32) in the radial direction;

- leading the exhaust gases in the first duct (39) in a first direction (100) towards the first end element (24) of the casing;

- leading the exhaust gases from the first duct (39) to the vaporisation pipe (34) via a passage (42) in which there is an arrangement (36) for adding a reducing agent, the vaporisation pipe (34) being connected to the first duct (39) via a passage (42);

- leading the exhaust gases in the vaporisation pipe (34) towards the second end element (26) of the casing (20) in a second direction (200) which is opposite to the first direction (100);
- leading the exhaust gases from the vaporisation pipe (34) to a second duct (44) which is outside the vaporisation pipe (34) and in which the exhaust gases flow in the first direction (100);
- leading the exhaust gases from the second duct (44) to an SCR substrate (32) through which they are led in the second direction (200);
- leading the exhaust gases out from the casing (20) via the outlet (30).

## Patentansprüche

1. Schalldämpfer (12) für einen Verbrennungsmotor, wobei der Schalldämpfer (12) ein Gehäuse (20) mit einer im Wesentlichen kreiszylindrischen Manteloberfläche (22), ein erstes Endelement (24) und ein zweites Endelement (26), wenigstens einen Einlass (28) zum Einleiten eines Abgasstroms in das Gehäuse (20) und wenigstens einen Auslass (30) zum Ableiten des Abgasstroms aus dem Gehäuse (20), ein selektives katalytisches Reduktionsreinigungssystem (SCR), das ein SCR-Substrat (32), ein Verdampfungsrohr (34) und eine Vorrichtung zum Hinzufügen eines Reduktionsmittels in den Abgasstrom umfasst, um die $NO_x$-Bestandteile des Abgasstroms zu reduzieren, **dadurch gekennzeichnet,**

- **dass** der Schalldämpfer (12) einen ersten zylindrischen Bereich (38) in der Nähe des Einlasses (28), einen Partikelfilter (40) in der Nähe des ersten Bereichs (38) und einen ersten zylindrischen Kanal (38) in der Nähe des Partikelfilters (40) umfasst, wobei der Partikelfilter (40) kreiszylindrisch ist und in der radialen Richtung das SCR-Substrat umgibt, so dass die Abgase dazu veranlasst werden, von dem ersten Bereich (38) zu dem ersten zylindrischen Kanal (39) durch den Partikelfilter (40) in einer im Wesentlichen radialen Richtung relativ zu der Mittellinie des Schalldämpfers zu strömen, wobei in dem Kanal (39) die Abgase dazu veranlasst werden, in einer ersten Richtung (100) hinsichtlich des ersten Elements (24) des Gehäuses zu strömen;
- **dass** der erste zylindrische Kanal (39) das SCR-Substrat (32) umgibt;
- **dass** das Verdampfungsrohr (34) im Wesentlichen konzentrisch zu dem SCR-Substrat (32) angeordnet ist, und wobei das SCR-Substrat (32) das Verdampfungsrohr (34) umgibt, so dass das Verdampfungsrohr (34) über eine Passage (42) mit dem ersten Kanal (39) verbunden ist, und die Abgase in dem Verdampfungsrohr (34) dazu veranlasst werden, zu dem zweiten Endelement (36) des Gehäuses (20) in einer zweiten Richtung (200) zu strömen, die der ersten Richtung (100) entgegengesetzt ist;
- **dass** ein zweiter Kanal (44) zwischen dem Verdampfungsrohr (34) und dem SCR-Substrat (32) vorgesehen ist, so dass die Abgase durch den zweiten Kanal (44) an der Außenseite des Verdampfungsrohrs (34) zu dem SCR-Substrat (32) strömen, und die Abgase in dem zweiten Kanal (44) dazu veranlasst werden, in die erste Richtung (100) zu strömen;

**dass** der Auslass (30) in der Nähe des SCR-Substrats (32) angeordnet ist, so dass die Abgase dazu veranlasst werden, von dem Schalldämpfer (12) über den Auslass (30) heraus zu strömen, wenn die Abgase das SCR-Substrat (32) passiert haben.

2. Schalldämpfer (12) nach Anspruch 1, **dadurch gekennzeichnet, dass** der Partikelfilter (40) ein Faserfilter ist, der Siliziumdioxid-Fasern umfasst.

3. Schalldämpfer (12) nach Anspruch 2, **dadurch gekennzeichnet, dass** die Siliziusdioxid-Fasern einen durchschnittlichen Durchmesser von 5-20 $\mu$m aufweisen.

4. Schalldämpfer (12) nach einem der Ansprüche 2 und 3, **dadurch gekennzeichnet, dass** der Faserfilter derart ausgelegt ist, dass seine Anströmgeschwindigkeit

- $Fv = Q_{Max}/A \leq 1$ m/s ist, wobei

$Q_{Max}$ = maximaler Abgasstrom in dem Abgassystem ($m^3$/s) ist, und
$A$ = der Oberflächenbereich des Filters ($m^2$) ist, den der Abgasstrom passiert

- wobei das Verhältnis der Fasermasse zu dem maximalen Abgasstrom in dem Faserfilter $m_f/Q_{Max} \geq 1500$ g/1 $m^3$/s ist, wobei $m_f$ = Fasermasse ist
- wobei die maximale Durchlässigkeit des Faserfilters geringer als oder gleich 99,3 % ist.

5. Schalldämpfer (12) nach einem der Ansprüche 2 bis 4, **dadurch gekennzeichnet, dass** die Durchlässigkeit des Faserfilters 95-99 % ist.

6. Schalldämpfer (12) nach einem der Ansprüche 2 bis 5, **dadurch gekennzeichnet, dass** die Fasern in dem Faserfilter mit einem katalytischen Material überzogen sind.

7. Schalldämpfer (12) nach einem der vorherigen Ansprüche, **dadurch gekennzeichnet, dass** die Dicke des Partikelfilters von 25 bis 50 mm beträgt.

**8.** Abgassystem (10) für einen Verbrennungsmotor (2), **dadurch gekennzeichnet, dass** das Abgassystem (10) mit einem Schalldämpfer nach einem der Ansprüche 1 bis 7 versehen ist.

**9.** Verfahren zum Abgasreinigen eines Schalldämpfers (12) eines Verbrennungsmotors, wobei der Schalldämpfer (12) ein im Wesentlichen kreiszylindrisches Gehäuse (20), ein erstes Endelement (24) und ein zweites Endelement (26) und wenigstens einen Einlass (28) zum Einleiten von Abgasen in das Gehäuse (20) und wenigstens einen Auslass (30) zum Ableiten der Abgase aus dem Gehäuse (20), ein selektives katalytisches Reduktionsreinigungssystem (SCR), das ein SCR-Substrat (32), ein Verdampfungsrohr (34) und eine Vorrichtung (36) zum Hinzufügen eines Reduktionsmittels in den Abgasstrom umfasst, um die $NO_x$-Bestandteile des Abgasstroms zu reduzieren, wobei das Verfahren die folgenden Schritte umfasst:

- Einleiten der Abgase von dem Einlass (28) in einen ersten zylindrischen Bereich (38);
- Leiten der Abgase von dem ersten Bereich (38) zu einem ersten zylindrischen Kanal (39) durch den kreiszylindrischen Partikelfilter (40) in einer im Wesentlichen radialen Richtung relativ zu der Mittellinie des Schalldämpfers, der in der radialen Richtung das SCR-Substrat (32) umgibt;
- Leiten der Abgase in dem ersten Kanal (39) in einer ersten Richtung (100) hinsichtlich des ersten Endelements (24) des Gehäuses;
- Leiten der Abgase von dem ersten Kanal (39) zu dem Verdampfungsrohr (34) über eine Passage (42), in der eine Vorrichtung (36) zum Hinzufügen eines Reduktionsmittels vorgesehen ist, wobei das Verdampfungsrohr (34) über eine Passage (42) mit dem ersten Kanal (39) verbunden ist;
- Leiten der Abgase in dem Verdampfungsrohr (34) hinsichtlich des zweiten Elements (26) des Gehäuses (20) in einer zweiten Richtung (200), die entgegengesetzt der ersten Richtung (100) ist;
- Leiten der Abgase von dem Verdampfungsrohr (34) zu einem zweiten Kanal (44), der außerhalb des Verdampfungsrohrs (34) liegt, und in dem die Abgase in der ersten Richtung (100) strömen;
- Leiten der Abgase von dem zweiten Kanal (44) zu einem SCR-Substrat (32), durch den sie in die zweite Richtung (200) geleitet werden;
- Ableiten der Abgase über den Auslass (30) aus dem Gehäuse (20).

**Revendications**

**1.** Silencieux (12) pour un moteur à combustion, lequel silencieux (12) comprend une enveloppe (20) avec une surface enveloppante (22) sensiblement cylindrique circulaire, un premier élément d'extrémité (24) et un second élément d'extrémité (26), au moins une entrée (28) pour conduire un flux d'échappement dans l'enveloppe (20) et au moins une sortie (30) pour conduire le flux d'échappement en dehors de l'enveloppe (20), un système de purification à réduction catalytique sélective (SCR) qui comprend un substrat SCR (32), un tube de vaporisation (34) et un agencement (36) pour ajouter un agent réducteur au flux d'échappement afin de réduire la teneur en $NO_x$ du flux d'échappement, **caractérisé en ce que**

- le silencieux (12) comprend un premier espace cylindrique (38) proche de l'entrée (28), un filtre à particules (40) proche du premier espace (38), et un premier conduit cylindrique (39) proche du filtre à particules (40), lequel filtre à particules (40) est cylindrique circulaire et entoure le substrat SCR dans la direction radiale, si bien que les gaz d'échappement doivent s'écouler du premier espace (38) au premier conduit cylindrique (39) par le filtre à particules (40) dans une direction sensiblement radiale par rapport à l'axe central du silencieux, dans lequel conduit (39) les gaz d'échappement doivent s'écouler dans une premier direction (100) vers le premier élément d'extrémité (24) de l'enveloppe;
- le premier conduit cylindrique (39) entoure le substrat SCR (32) ;
- le tube de vaporisation (34) est disposé sensiblement concentrique au substrat SCR (32) et le substrat SCR (32) entoure le tube de vaporisation (34), si bien que le tube de vaporisation (34) est connecté au premier conduit (39) via un passage (42) et les gaz d'échappement dans le tube de vaporisation (34) doivent s'écouler vers le second élément d'extrémité (36) de l'enveloppe (20) dans une seconde direction (200) qui est opposée à la première direction (100) ;
- un second conduit (44) est prévu entre le tube de vaporisation (34) et le substrat SCR (32), si bien que les gaz d'échappement s'écoulent vers le substrat SCR (32) par le second conduit (44) sur le côté extérieur du tube de vaporisation (34) et les gaz d'échappement dans le second conduit (44) doivent s'écouler dans la première direction (100) ;
- la sortie (30) est située proche du substrat SCR (32), si bien que les gaz d'échappement doivent s'écouler vers l'extérieur du silencieux (12) par la sortie (30) lorsque les gaz d'échappement ont passé le substrat SCR (32).

**2.** Silencieux (12) selon la revendication 1, **caractérisé en ce que** le filtre à particules (40) est un filtre à fibres qui comprend des fibres de dioxyde de silicium.

**3.** Silencieux (12) selon la revendication 2, **caractérisé en ce que** les fibres de dioxyde de silicium ont un diamètre moyen de 5 à 20 $\mu$m.

**4.** Silencieux (12) selon l'une des revendications 2 et 3, **caractérisé en ce que** le filtre à fibres présente des dimensions telles que

- sa vitesse frontale FV = $Q_{max}$/A $\leq$ 1 m/s, où

$Q_{max}$ est le flux d'échappement maximal dans le système d'échappement (en m$^3$/s) et
A est la surface du filtre (en m$^2$) par laquelle le flux d'échappement passe,

- le rapport entre la masse de fibres et le flux maximal d'échappement dans le filtre à fibres est

$m_f$/$Q_{max}$ $\geq$ 1500 g / 1 m$^3$/s, où
$m_f$ est la masse de fibres,

- la porosité maximale du filtre à fibres est inférieure ou égale à 99,3 %.

**5.** Silencieux (12) selon l'une des revendications 2 à 4, **caractérisé en ce que** la porosité du filtre à fibres est de 95 à 99 %.

**6.** Silencieux (12) selon l'une des revendications 2 à 5, **caractérisé en ce que** les fibres dans le filtre à fibres sont enrobées d'un matériau catalytique.

**7.** Silencieux (12) selon l'une des revendications précédentes, **caractérisé en ce que** l'épaisseur du filtre à particules est de 25 à 50 mm.

**8.** Système d'échappement (10) pour un moteur à combustion (2), **caractérisé en ce que** le système d'échappement (10) est pourvu d'un silencieux (12) selon l'une des revendications 1 à 7.

**9.** Procédé de purification d'échappement d'un silencieux (12) d'un moteur à combustion, lequel silencieux (12) comprend une enveloppe (20) sensiblement cylindrique circulaire, un premier élément d'extrémité (24) et un second élément d'extrémité (26) et au moins une entrée (28) pour conduire des gaz d'échappement dans l'enveloppe (20) et au moins une sortie (30) pour conduire les gaz d'échappement en dehors de l'enveloppe (20), un système de purification à réduction catalytique sélective (SCR) qui comprend un substrat SCR (32), un tube de vaporisation (34) et un agencement (36) pour ajouter un agent réducteur au flux d'échappement afin de réduire la teneur en NO$_x$ du flux d'échappement, lequel procédé comprend les étapes suivantes :

- conduire les gaz d'échappement de l'entrée (28) dans un premier espace cylindrique (38) ;
- conduire les gaz d'échappement du premier espace (38) vers un premier conduit cylindrique (39) dans une direction sensiblement radiale par rapport à l'axe central du silencieux par un filtre à particules cylindrique circulaire (40) qui entoure le substrat SCR (32) dans la direction radiale ;
- conduire les gaz d'échappement dans le premier conduit (39) dans une première direction (100) vers le premier élément d'extrémité (24) de l'enveloppe ;
- conduire les gaz d'échappement du premier conduit (39) vers le tube de vaporisation (34) via un passage (42) où il y a un agencement (36) pour ajouter un agent réducteur, le tube de vaporisation (34) étant connecté au premier conduit (39) via un passage (42) ;
- conduire les gaz d'échappement dans le tube de vaporisation (34) vers le second élément d'extrémité (26) de l'enveloppe (20) dans une seconde direction (200) qui est opposée à la première direction (100) ;
- conduire les gaz d'échappement du tube de vaporisation (34) vers un second conduit (44) qui est à l'extérieur du tube de vaporisation (34) et dans lequel les gaz d'échappement s'écoulent dans la première direction (100) ;
- conduire les gaz d'échappement du second conduit (44) vers un substrat SCR (32) au travers duquel ils sont conduits dans la seconde direction (200) ;
- conduire les gaz d'échappement vers l'extérieur de l'enveloppe (20) par la sortie (30).

Figure 1

EP 2 941 552 B1

Figure 2

Figure 3

**EP 2 941 552 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080066451 A
- US 20020046555 A
- WO 2004038192 A